# EUROPEAN PATENT SPECIFICATION

(11) **EP 4 148 887 B1**
(45) Date of publication and mention of the grant of the patent: **01.10.2025**
(21) Application number: 21886656.4
(22) Date of filing: 18.10.2021
(51) Int. Cl.: H01M 50/30, H01M 50/342, H01M 50/578

(54) **CAP ASSEMBLY AND SECONDARY BATTERY INCLUDING THE SAME**
KAPPENANORDNUNG UND SEKUNDÄRBATTERIE DAMIT
ENSEMBLE CAPUCHON ET BATTERIE SECONDAIRE LE COMPRENANT

(30) Priority: 27.10.2020 KR 20200140614
(43) Date of publication of application: 15.03.2023
(73) Proprietor: LG Energy Solution, Ltd., Seoul 07335 (KR)
(72) Inventor: YANG, Kun-Joo, Daejeon 34122 (KR); SON, Young-Su, Daejeon 34122 (KR)
(74) Representative: Goddar, Heinz J.
(86) International application number: PCT/KR2021/014524
(87) International publication number: WO 2022/092662

(56) References cited:
- CN-U- 209 401 723
- JP-A- 2008 117 534
- JP-A- H07 192 712
- KR-A- 20110 105 953
- KR-A- 20180 091 301
- KR-B1- 0 153 364
- US-A1- 2007 154 789
- US-A1- 2013 209 842

## Description

### TECHNICAL FIELD

The present disclosure relates to a secondary battery and a cap assembly used therefor, and more particularly, to a secondary battery having increased safety in case of ignition or explosion, and a cap assembly used therefor.

### BACKGROUND ART

Recently, as portable devices such as smartphones and laptop computers, transportation means such as electric vehicles, electric kickboards, and electric two-wheeled vehicles, and devices such as energy storage systems (ESS) are widely used, the interest in secondary batteries serving as a core part for supplying power is growing.

In particular, since secondary batteries can be used repeatedly for a long period of time by being charged and discharged, the secondary batteries have been widely used in various fields in recent years. The secondary batteries may include several types of batteries. Among them, a lithium secondary battery has a great capacity compared to nickel-cadmium batteries or nickel-hydrogen batteries and is more spotlighted due to its high energy density per unit weight, so it is utilized more and more.

The lithium secondary battery generally uses lithium oxide and carbonaceous material as a positive electrode active material and a negative electrode active material, respectively. The lithium secondary battery includes an electrode assembly in which a positive electrode plate and an negative electrode plate respectively coated with the positive electrode active material and the negative electrode active material are disposed with a separator interposed between them, and an exterior material which seals and receives the electrode assembly together with an electrolyte.

Meanwhile, depending on the shape of the battery case, a lithium secondary battery may be classified into a can-type secondary battery where the electrode assembly is included in a battery can made of a metal material and a pouch-type battery where the electrode assembly is included in a pouch of an aluminum laminate. In addition, depending on the shape of the metal can, the can-type secondary battery may be further classified into a cylindrical battery and a rectangular battery. The exterior material of the rectangular or cylindrical secondary battery includes a battery can and a cap assembly hermetically coupled to an open end of the battery can.

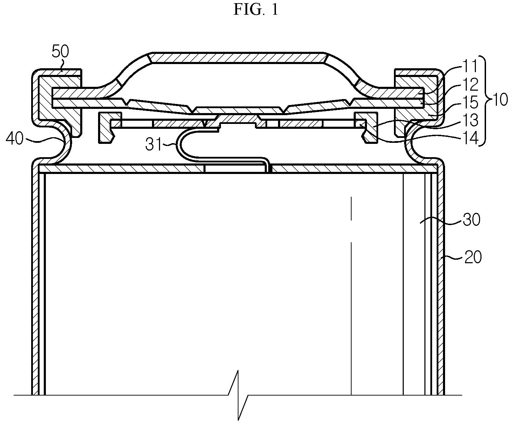

FIG. 1 is a sectional view showing a cap assembly 10 of a conventional cylindrical secondary battery.

Referring to FIG. 1, the cylindrical secondary battery generally includes a cylindrical battery can 20, a jelly-roll type electrode assembly 30 received in the battery can 20, a cap assembly 10 coupled to the upper portion of the battery can 20, a beading portion 40 provided at the front end of the battery can 20 for mounting the cap assembly 10, and a crimping portion 50 for sealing the battery.

The electrode assembly 30 is wound into a jelly-roll shape in a state where a separator is interposed between a positive electrode and a negative electrode. A positive electrode lead 31 is attached to the positive electrode and connected to the cap assembly 10, and a negative electrode lead (not shown) is attached to the negative electrode and connected to the lower end of the battery can 20.

The cap assembly 10 includes a top cap 11 forming a positive electrode terminal, a safety vent 12 for interrupting a current and/or for exhausting gas when the pressure in the battery increases, an insulation member 13 for electrically separating the safety vent 12 except for a specific portion from a current interrupt member 14, and a current interrupt member 14 connected to a positive electrode lead 31 connected to the positive electrode, which are laminated in the above order. In addition, the cap assembly 10 is mounted to the beading portion 40 of the battery can 20 in a state of being mounted to a gasket 15. Therefore, in a normal operating condition, the positive electrode of the electrode assembly 30 is electrically connected to the top cap 11 via the positive electrode lead 31, the current interrupt member 14, and the safety vent 12.

In such a cap assembly, when ignition or the like occurs at the electrode assembly 30, the pressure inside the battery can 20 increases. In addition, the pressure increase deforms the safety vent 12 so that the gas inside the battery can 20 is discharged to the outside. However, during the gas discharge process, the active material of the electrode assembly 30 may be discharged to the outside of the battery can 20 in a heated state. The high-temperature active material discharged in this way may be adhered in the form of a fallout to other components around the secondary battery, for example other secondary batteries, to heat the secondary batteries.

In particular, recently, rather than using one secondary battery alone, a plurality of secondary batteries are often used to be included in one battery module or battery pack. For example, in the case of an electric vehicle, dozens or hundreds of secondary batteries may be included in a battery module or battery pack. At this time, when ignition occurs in one of the secondary batteries to discharge the heated active material to the outside, this may cause a chain combustion by heating other secondary batteries around the ignited secondary battery. In addition, such a chain combustion may not only damage the battery module or battery pack, but also cause great problems, such as fire in a device or structure to which the battery is mounted and personal injury.

JP H07 192 712 A relates to a nonaqueous electrolyte secondary battery where a plurality of negative electrodes and positive electrodes are laminated inside a battery jar via separators, to be connected to a positive electrode lead, and a battery cover is disposed, a safety valve is housed inside the battery cover. When the inner pressure of an electrolyte inside the battery is increased according to the increase in temperature, the safety valve is operated to release gas through an opening formed on the battery cover, thus preventing the breakage of the battery. In the nonaqueous electrolyte secondary battery, a film having a net-like opening is interposed between the safety valve and the battery cover.

### DISCLOSURE

### Technical Problem

The present disclosure is designed to solve the problems of the related art, and therefore the present disclosure is directed to providing a cap assembly having an improved structure to block or reduce the discharge of heated active material in a situation such as gas release, ignition or explosion, and a secondary battery using the cap assembly.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a cap assembly (100) for a secondary battery, which is coupled to an open end of a battery can (200), the cap assembly comprising: a top cap (110) disposed on an uppermost portion of the cap assembly (100) in a protrusive form to form a positive electrode terminal; a safety vent (120) disposed below the top cap (110) to deform the shape when an internal pressure of the battery can (200) increases; a gasket (130) configured to surround edges of the top cap (110) and the safety vent (120); and a screen member (140) interposed between the top cap (110) and the safety vent (120) and having an edge surrounded by the gasket (130), the screen member (140) being at least partially configured in a mesh form, characterized in that the screen member (140) includes a plurality of unit screens (141, 142) stacked on each other in a vertical direction, wherein an upper screen (141) among the plurality of unit screens (141, 142) is formed in a dome shape such that at least a central portion is convex upward, and a lower screen (142) among the plurality of unit screens (141, 142) is formed in a dome shape such that at least a central portion is convex downward.

Here, the cap assembly may further comprise a current interrupt member having an upper portion connected to a lower end of the safety vent and a lower portion connected to an electrode assembly and configured to interrupt electric connection between the electrode assembly and the top cap when the safety vent deforms.

Also, the screen member may include a protrusion formed to protrude upward or downward.

Also, the plurality of unit screens may be configured to have different mesh forms from each other.

Also, the lower screen may be configured such that the convex shape thereof is reversed from the downward direction to the upward direction by the deformation of the safety vent.

Also, the lower screen may be configured such that at least some of holes formed therein are located at different positions from holes formed in the upper screen in a horizontal direction when the convex shape is reversed.

In another aspect of the present disclosure, there is also provided a secondary battery, comprising the cap assembly for a secondary battery according to the present disclosure.

In another aspect of the present disclosure, there is also provided a battery pack, comprising at least one secondary battery according to the present disclosure.

### Advantageous Effects

According to the present disclosure, the safety of the secondary battery may be improved.

In particular, according to an embodiment of the present disclosure, when a situation such as internal gas release caused by an increase in internal pressure of the secondary battery, ignition caused by thermal runaway, or explosion occurs, it is possible to block or reduce that the internal active material is discharged to the outside of the battery.

In particular, in a situation such as ignition or explosion, the internal active material may be in a very high temperature state. Thus, if the internal active material is discharged to the outside, other secondary batteries or the like may be heated to cause a chain ignition or explosion inside the battery module or battery pack. However, according to an embodiment of the present disclosure, even if ignition or explosion occurs in one or some secondary batteries, it is possible to prevent the high-temperature internal active material from being discharged to the outside, thereby preventing a chain ignition or explosion.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a cap assembly of a conventional cylindrical secondary battery;
FIG. 2 is an exploded perspective view schematically showing that a cap assembly according to an embodiment of the present disclosure (not forming part of the claimed invention) is included in a secondary battery.
FIG. 3 is a sectional view schematically showing the cap assembly of the secondary battery according to an embodiment of the present disclosure (not forming part of the claimed invention).
FIG. 4 is a top view schematically showing a screen member included in the cap assembly according to an embodiment of the present disclosure (not forming part of the claimed invention).
FIG. 5 is a perspective view schematically showing the screen member included in the cap assembly according to an embodiment of the present disclosure (not forming part of the claimed invention).
FIG. 6 is a sectional view, taken along the line B-B' of FIG. 5.
FIG. 7 is a sectional view schematically showing a state where a safety vent is deformed with respect to the cap assembly according to an embodiment of the present disclosure (not forming part of the claimed invention).
FIG. 8 is a sectional view schematically showing some components of a screen member according to another embodiment of the present disclosure (not forming part of the claimed invention).
FIG. 9 is a sectional view schematically showing a cap assembly for a secondary battery according to another embodiment of the present disclosure (not forming part of the claimed invention).
FIG. 10 is an enlarged view showing a portion C2 of FIG. 9.
FIGS. 11 and 12 are top views schematically showing a screen member according to still another embodiments of the present disclosure.
FIG. 13 is a sectional view schematically showing a cap assembly according to an embodiment according to the claimed invention.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

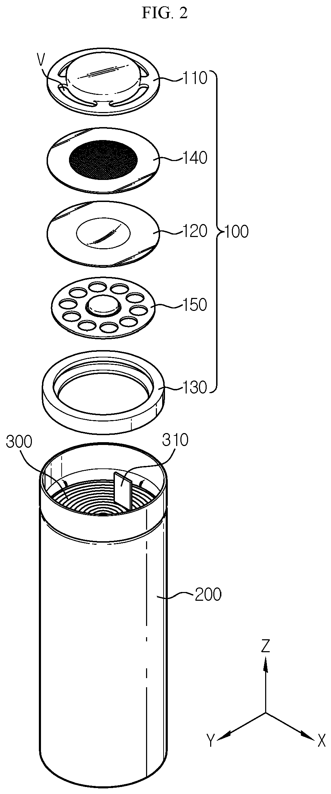

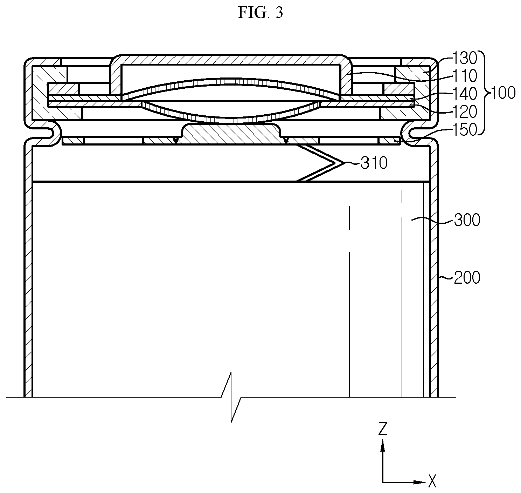

FIG. 2 is an exploded perspective view schematically showing that a cap assembly 100 according to an embodiment of the present disclosure is included in a secondary battery. Also, FIG. 3 is a sectional view schematically showing the cap assembly 100 of the secondary battery according to an embodiment of the present disclosure.

Referring to FIGS. 2 and 3, the secondary battery according to the present disclosure includes an electrode assembly 300, a battery can 200, and a cap assembly 100.

The electrode assembly 300 includes a positive electrode plate and a negative electrode plate disposed with a separator interposed between them, and is received in a battery can 200. At this time, the electrode assembly 300 may be wound and disposed in a jelly-roll form, and in this case, it is also called a jelly roll. Electrode plates of the electrode assembly 300 may be configured so that a current collector is coated with an active material slurry, and the slurry is formed by stirring active material particles, auxiliary conductor, binder, plasticizer and so on, to which a solvent is added. Non-coating portions may be present at starting and ending portions of the current collector in a winding direction of the electrode plates, and an electrode lead corresponding to each electrode plate may attach to the non-coating portion. Generally, a positive electrode lead 310 may be attached to the upper end of the electrode assembly 300 and electrically connected to the cap assembly 100, and a negative electrode lead (not shown) may be attached to the lower end of the electrode assembly 300 and connected to the bottom of the battery can 200.

Meanwhile, though not shown in the figures, an upper insulation plate may be disposed at the upper end of the electrode assembly 300. The upper insulation plate may play a role of insulating the electrode assembly 300 from the cap assembly 100.

The battery can 200 is a light conductive metal material such as aluminum, stainless steel, or their alloys, and it may have a cylindrical or angled structure with an opening at an upper end and a closed bottom opposite to the opening. **In** the inner space of the battery can 200, the electrode assembly 300 may be received together with an electrolyte.

In particular, the secondary battery according to the present disclosure may be a cylindrical battery in which the battery can 200 is formed in a cylindrical shape. However, the battery can 200 may be formed in various shapes, such as a prismatic shape, other than the cylindrical shape.

A beading portion may be formed on the battery can 200 according to the present disclosure, as shown in FIGS. 2 and 3. However, the present disclosure is not necessarily limited to the form of the battery can 200, and the present disclosure may also be applied to a battery can 200 on which the beading portion is not formed.

The cap assembly 100 for a secondary battery according to the present disclosure is a component of a secondary battery, which is coupled to an upper end, namely an open end, of the battery can 200, and is capable of sealing the inner space of the battery can 200 when coupled to the open end of the battery can 200. The cap assembly 100 may be formed in various shapes, such as a circular shape or a prismatic shape, depending on the shape of the battery can 200.

The cap assembly 100 for a secondary battery according to the present disclosure includes a top cap 110, a safety vent 120, a gasket 130 and a screen member 140.

The top cap 110 may be disposed on an uppermost portion of the cap assembly 100 in an upwardly protrusive form to form a positive electrode terminal. Accordingly, the top cap 110 may be configured to be electrically connected to an external device, such as a load or a charging device. Alternatively, the top cap 110 may be configured to be electrically connected to another secondary battery. In particular, a plurality of secondary batteries may be electrically connected to each other in series and/or parallel to form a battery module or battery pack. In this case, the top cap 110 may be in contact with a top cap 110 or a battery can 200 of another secondary battery, or a connecting member such as a bus bar.

A gas hole may be formed in the top cap 110, as indicated by V in FIG. 2, so that gas may be discharged therethrough. Accordingly, when gas is generated from the electrode assembly 300, the gas may be discharged to the outside of the battery can 200 through the gas hole V.

The top cap 110 may be made of an electrically conductive material, for example, a metal material such as stainless steel or aluminum.

The safety vent 120 may be disposed to be located below the top cap 110 so as to be closer to the electrode assembly 300 than the top cap 110. In addition, the safety vent 120 may be configured to deform its shape when the internal pressure of the secondary battery, namely the internal pressure of the battery can 200, increases to a certain level or above. For example, the safety vent 120 may be configured to be deformed and ruptured when the internal pressure of the secondary battery is 15 kgf/cm² or above.

To this end, as shown in the drawing, the safety vent 120 may be formed so that a central portion thereof protrudes downward. In addition, when gas is generated from the inside of the secondary battery, namely from the electrode assembly 300, to increase the internal pressure of the battery can 200, the safety vent 120 may be deformed to protrude upward while its shape is reversed. In particular, a predetermined notch may be formed near the center of the safety vent 120, and the safety vent 120 may rupture around the notch during deformation. Therefore, the gas filled in the battery can 200 may be discharged to the outside through the ruptured part of the safety vent 120.

The gasket 130 may be configured to surround edges, namely outer circumferences, of the top cap 110 and the safety vent 120. The gasket 130 may be made of a material having electrical insulation so that the edge portions of the top cap 110 and the safety vent 120 may be insulated from the battery can 200. In addition, the gasket 130 may be made of a material having impact resistance, elasticity and durability to support and protect the cap assembly 100. Thus, the gasket 130 may be made of, for example, polyolefin or polypropylene. In addition, it is preferable that the gasket 130 is bent by mechanical processing rather than by heat treatment in order to prevent the electrical insulation from being weakened.

The screen member 140 is interposed between the top cap 110 and the safety vent 120. In addition, an edge of the screen member 140 is surrounded by the gasket 130. That is, the outer circumference of the top cap 110, the outer circumference of the screen member 140, and the outer circumference of the safety vent 120 may be stacked in close contact with each other and covered by the gasket 130.

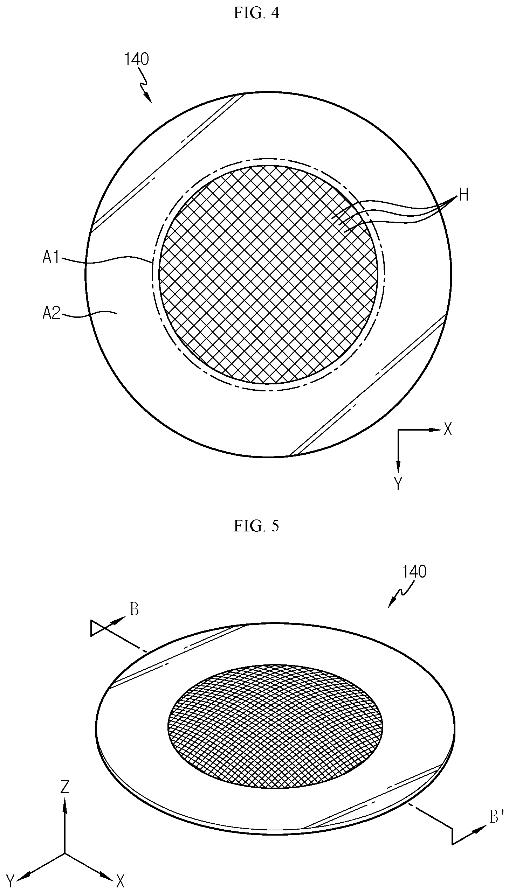

At least a portion of the screen member 140 may be configured in a mesh form. A more specific form of the screen member 140 will be described in more detail with additional reference to FIG. 4.

FIG. 4 is a top view schematically showing the screen member 140 included in the cap assembly 100 according to an embodiment of the present disclosure.

As shown in FIG. 4, a central portion of the screen member 140, such as a portion indicated by A1, may be configured in a mesh form. Here, the mesh form may be configured in a form in which a plurality of holes H are formed in a plate-shaped member. In particular, in the case of the cap assembly 100 applied to a cylindrical secondary battery, the screen member 140 may be configured in a circular plate shape, like the top cap 110 and the safety vent 120, and a plurality of holes H may be formed in the central portion of the circular plate. Representatively, in the central portion such as the portion A1 of FIG. 4, the screen member 140 may be configured in a mesh form in which different wires are orthogonal to each other. In this case, the screen member 140 may be easily manufactured, and a large number of holes H may be formed while reducing the size of the holes H.

Meanwhile, an edge portion of the screen member 140, such as a portion indicated by A2 in FIG. 4, may not be configured in a mesh form. Moreover, the screen member 140 may be surrounded by the gasket 130 at the edge portion. That is, the portion of the screen member 140 through which gas does not pass may not be configured in a mesh form.

The screen member 140 may at least partially be made of an electrically conductive material such as metal. Here, the metal material may include a material such as steel or nickel. Since such a steel or nickel material has a higher melting point than copper or aluminum, the shape may be more stably maintained even when the battery ignites or explodes.

In particular, at least the edge portion of the screen member 140, as indicated by A2, may be made of an electrically conductive material. The edge portion of the screen member 140 may be interposed between the edge of the top cap 110 and the edge of the safety vent 120 to serve as an electrical connection path. That is, the top cap 110 and the safety vent 120 may not be in direct contact with each other but may be electrically connected by the screen member 140. Accordingly, at least the edge portion of the screen member 140 may be made of an electrically conductive material.

According to the configuration of the present disclosure as described above, due to the screen member 140, the cap assembly 100 with improved safety may be provided. In particular, since at least a portion, for example the central portion, of the screen member 140 is configured in a mesh form, when the internal pressure of the battery can 200 increases and the safety vent 120 is ruptured or deformed, there is no major hindrance to discharge the gas inside the battery can 200 to the outside. However, even in the gas discharge process, the active material inside the battery can 200 may not be discharged to the outside due to the mesh configuration of the screen member 140. That is, even when the secondary battery ignites or explodes, the active material inside the battery can 200 may be blocked by the screen member 140. In particular, when the secondary battery ignites or explodes, the temperature of the secondary battery is often high. Therefore, in this case, the active material inside the battery can 200 may be heated to a very high temperature. However, according to an embodiment of the present disclosure, the high-temperature active material may not be discharged to the outside of the battery can 200 by the screen member 140. Therefore, it is possible to prevent the problem that an active material discharged to the outside damages surrounding secondary batteries or causes a chain ignition.

In addition, as shown in FIGS. 2 and 3, the cap assembly 100 according to the present disclosure may further include a current interrupt member 150.

The current interrupt member 150 may be configured to have an upper portion at least partially connected to a lower end of the safety vent 120 and a lower portion connected to an electrode lead, for example the positive electrode lead 310, of the electrode assembly 300. In addition, the current interrupt member 150 may be configured to block the electrical connection between the electrode assembly 300 and the top cap 110 when the safety vent 120 deforms. That is, the current interrupt member 150 is positioned between the safety vent 120 and the electrode assembly 300 so that the electrode assembly 300 and the safety vent 120 are electrically connected. The current interrupt member 150 may be referred to as a CID (Current Interrupt Device).

Therefore, in a normal state, the current generated from the electrode assembly 300 flows through the positive electrode lead 310 to the current interrupt member 150, the safety vent 120, the screen member 140, and the top cap 110, so that the secondary battery may be discharged. However, if the internal pressure of the battery increases due to gas generation and the shape of the safety vent 120 is reversed, the contact between the safety vent 120 and the current interrupt member 150 is broken or the current interrupt member 150 is damaged, thereby interrupting the electric connection between the safety vent 120 and the electrode assembly 300.

When the cap assembly 100 includes the current interrupt member 150, an insulating member may be further included. The insulating member may be interposed between the safety vent 120 and the current interrupt member 150 so that the current interrupt member 150 and the safety vent 120 are electrically insulated from each other except for the part where the central protrusive portion of the safety vent 120 and the current interrupt member 150 come into contact.

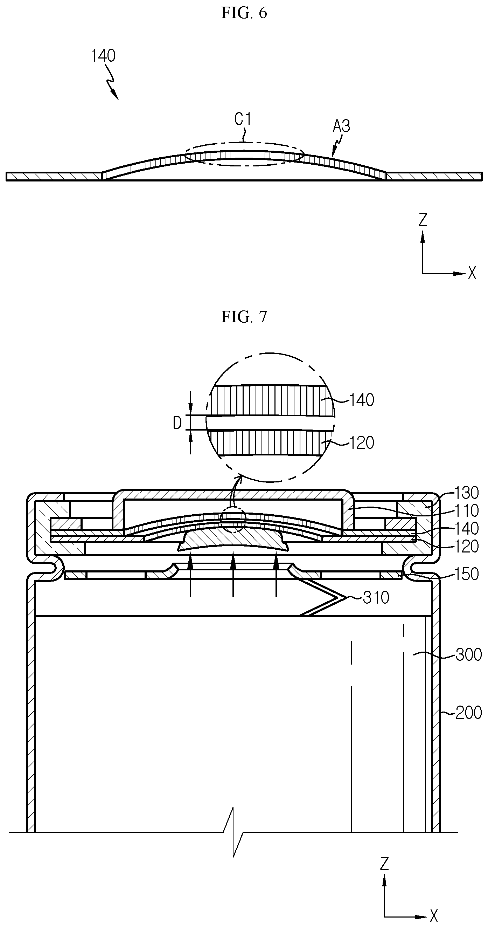

The screen member 140 is formed in a dome shape at least partially. This will be described in more detail with additional reference to FIGS. 5 and 6.

FIG. 5 is a perspective view schematically showing the screen member 140 included in the cap assembly 100 according to an embodiment of the present disclosure, and FIG. 6 is a sectional view, taken along the line B-B' of FIG. 5.

Referring to FIGS. 5 and 6 along with FIG. 3, the screen member 140 may be formed in a dome shape such that a central portion thereof protrudes upward. In particular, the screen member 140 is generally formed in a circular plate shape, and its central portion may be configured to protrude upward, like the portion indicated by A3 in FIG. 6.

In addition, an empty space may be formed below the upwardly protruding portion of the screen member 140. That is, when viewing the screen member 140 from the safety vent 120, namely when viewing the screen member 140 from the bottom to the top, it may be regarded that the screen member 140 has an upwardly concave portion.

According to this configuration of the present disclosure, in a situation in which gas is discharged to the outside of the battery can 200 due to explosion or the like of the battery, the explosion pressure may be evenly distributed to the screen member 140 having a dome shape. That is, the exhaust gas may be uniformly ejected at all parts of the screen member 140 without being concentrated on a specific part. Therefore, it is possible to prevent the screen member 140 from being damaged due to the pressure when the gas is discharged.

Moreover, according to the embodiment, when the safety vent 120 is deformed to protrude upward due to an increase in pressure inside the battery can 200, the upwardly protruding portion of the safety vent 120 may be inserted into the dome portion of the screen member 140. Therefore, it is possible to prevent the screen member 140 from being damaged due to the deformation of the safety vent 120.

In particular, the screen member 140 may be configured such that, when the safety vent 120 is deformed due to an increase in internal pressure, a dome portion is formed to be spaced apart from the deformed safety vent 120 by a predetermined distance. This will be described in more detail with reference to FIG. 7.

FIG. 7 is a sectional view schematically showing a state where the safety vent 120 is deformed with respect to the cap assembly 100 according to an embodiment of the present disclosure. For this embodiment, features to which the former description can be applied identically or similarly will not be described in detail, and features different from the above will be described in detail.

Referring to FIG. 7, when the internal pressure inside the battery can 200 increases, the safety vent 120 may be deformed to protrude upward, as indicated by an arrow. In addition, due to this deformation of the safety vent 120, the electrical connection between the current interrupt member 150 and the safety vent 120 may be cut. At this time, even in a state in which the safety vent 120 is deformed to protrude upward, the protruding portion of the safety vent 120 and the dome portion of the screen member 140 may be configured to be spaced apart from each other by a predetermined distance without contacting each other. That is, even if the safety vent 120 protrudes upward due to an increase in internal pressure inside the battery can 200, a predetermined distance or more may be maintained between the protruding portion and the dome portion of the screen member 140, as indicated by D in FIG. 7.

According to this configuration of the present disclosure, in a situation such as battery explosion, since the screen member 140 is prevented from being damaged due to the safety vent 120, the function of the screen member 140, namely a function of blocking the discharge of the active material, may be stably maintained.

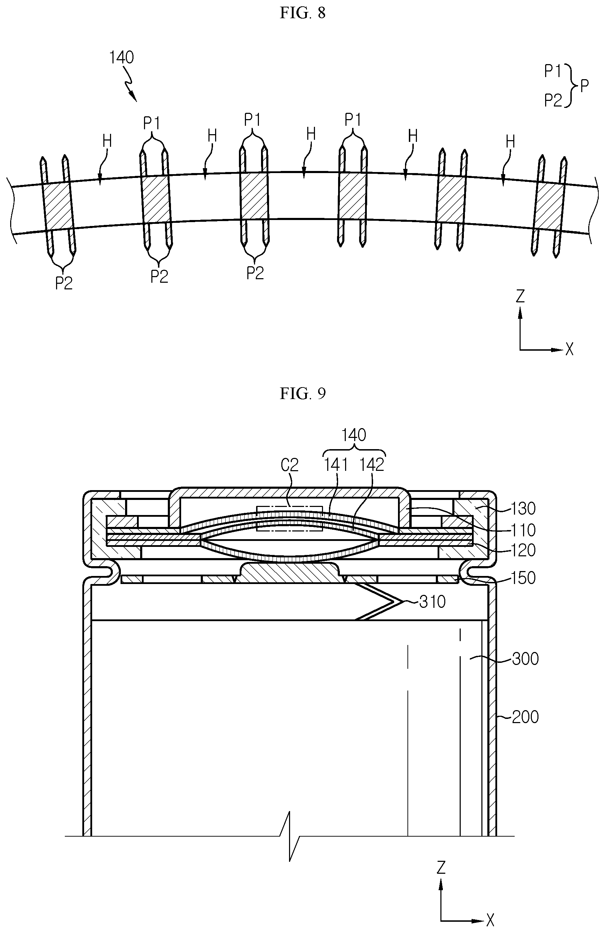

The screen member 140 may include a protrusion. This will be described in more detail with reference to FIG. 8.

FIG. 8 is a sectional view schematically showing some components of a screen member 140 according to another embodiment of the present disclosure. For example, FIG. 8 may be a modified example of the portion C1 of FIG. 6. Regarding this embodiment, features different from the former embodiment will be described in detail.

Referring to FIG. 8, the screen member 140 may include protrusions on an upper surface and/or a lower surface thereof, as indicated by P. For example, the screen member 140 may include a plurality of upper protrusions formed to protrude upward on the upper surface as indicated by P1. In addition, the screen member 140 may include a plurality of lower protrusions formed to protrude downward on the lower surface, as indicated by P2.

In particular, the protrusion P of the screen member 140 may be formed in a pin shape having a sharp tip. For example, the upper protrusion P1 of the screen member 140 may be configured such that at least an upper end becomes gradually thinner in an upper direction. In addition, the lower protrusion P2 of the screen member 140 may be configured such that at least a lower end becomes gradually thinner in a lower direction. Moreover, the protrusion P of the screen member 140 may be configured to be located around the hole H of the screen member 140.

According to this configuration of the present disclosure, when gas passes through the hole H of the screen member 140 in a situation such as battery explosion, it is possible to block that even the active material passes through the hole H of the screen member 140. In particular, there may be fine active material with a size smaller than the hole H of the screen member 140, or some active material may be sucked into the hole H of the screen member 140 due to the outgassing pressure. However, in the above configuration, such active material may be caught by the protrusion P. Accordingly, it is possible to prevent that the active material passes through the screen member 140 and moves toward the top cap 110 and is discharged to the outside of the battery.

Moreover, since the active material located inside the screen member 140 is caught by the lower protrusion P2 of the screen member 140, it is possible to prevent the active material from passing through the hole H of the screen member 140 in advance. Further, the lower protrusion P2 of the screen member 140 may prevent the active material from blocking the hole H of the screen member 140 or being caught in the hole H, thereby allowing the gas to be smoothly discharged to the outside through the hole H of the screen member 140. Also, even if the active material located at the lower side of the screen member 140 passes through the hole H of the screen member 140, the upper protrusion P1 of the screen member 140 may catch the active material again at the upper side before the active material moves toward the top cap 110.

Therefore, according to the embodiment, the effect of blocking the discharge of the active material by the screen member 140 may be further improved.

In addition, the screen member 140 includes a plurality of unit screens. This will be described in more detail with reference to FIG. 9.

FIG. 9 is a sectional view schematically showing a cap assembly 100 for a secondary battery according to reference embodiment. Regarding this reference embodiment, features different from the former embodiments will be described in detail.

Referring to FIG. 9, the screen member 140 may include two unit screens, namely an upper screen 141 and a lower screen 142. In addition, the upper screen 141 and the lower screen 142 are stacked on each other in the vertical direction. Also, the upper screen 141 and the lower screen 142 are configured to be spaced apart from each other by a predetermined distance in the vertical direction. In particular, even in a state in which the shape of the safety vent 120 is deformed due to an increase in pressure inside the battery can 200, the upper screen 141 and the lower screen 142 may be configured to be spaced apart from each other by a predetermined distance.

According to this configuration of the present disclosure, by the screen member 140 provided in a dual structure, the effect of preventing the active material from being discharged may be further improved. That is, when gas is released from the secondary battery, even if some of the heated active material passes through the lower screen 142, the active material may be finally filtered by the upper screen 141.

As shown in FIG. 9, both the upper screen 141 and the lower screen 142 may be configured in a dome shape convex upward. In particular, in this case, the upper screen 141 and the lower screen 142 may be configured such that their portions with a dome shape are inserted into the inner space (lower space) of the top cap 110 formed by the upwardly convex protrusion of the top cap 110. In this case, both the upper screen 141 and the lower screen 142 are configured so that the pressure is evenly distributed, while the space for receiving the upper screen 141 and the lower screen 142 is smoothly secured inside the cap assembly 100, thereby preventing unnecessary volume increase of the cap assembly 100.

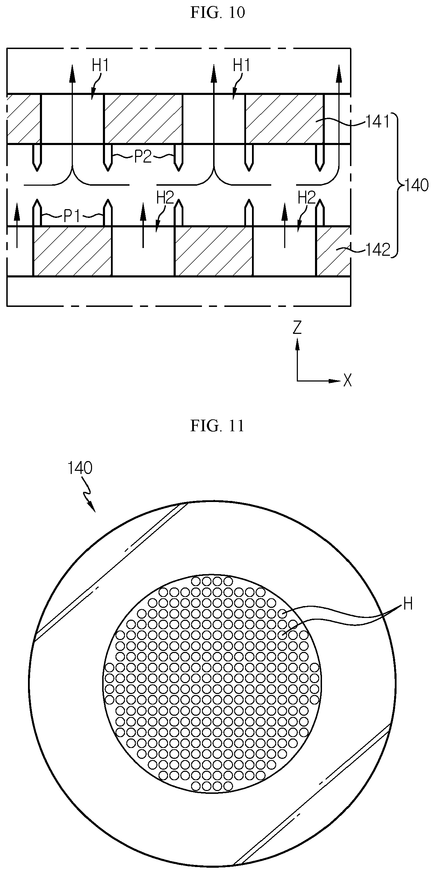

Moreover, the plurality of unit screens may be configured have different mesh forms. Here, the different mesh forms may mean that the positions, shapes, numbers, or the like of holes forming the meshes are different. This will be described in more detail with reference to FIG. 10.

FIG. 10 is an enlarged view showing a portion C2 of FIG. 9.

Referring to FIG. 10, the upper screen 141 and the lower screen 142 may be configured such that the holes thereof are located at different positions in the horizontal direction. More specifically, the hole H1 formed in the upper screen 141 and the hole H2 formed in the lower screen 142 may be configured to be located at different positions in the left and right direction (X-axis direction). In this case, in order for the gas that has passed through the hole H2 of the lower screen 142 to pass through the hole H1 of the upper screen 141, a moving direction of the gas should be changed, as indicated by an arrow in FIG. 10.

According to this embodiment of the present disclosure, between the upper screen 141 and the lower screen 142, the outflow path of the gas may be configured to be bent. Therefore, the active material filtering effect by the plurality of unit screens may be further improved.

Moreover, the upper screen 141 may include a lower protrusion P2 on at least the lower surface thereof, as indicated by P2 in FIG. 10. Alternatively, the lower screen 142 may include an upper protrusion P1 on at least the upper surface thereof, as indicated by P1 in FIG. 10. That is, at least one of the upper screen 141 and the lower screen 142 may include a protrusion P on the surfaces facing each other.

According to this configuration of the present disclosure, even if the active material is introduced into the space between the upper screen 141 and the lower screen 142, it is possible to prevent the active material from easily escaping from the space by the protrusion P. In particular, according to this configuration, it is possible to prevent the active material between the upper screen 141 and the lower screen 142 from being easily discharged into the hole H1 of the upper screen 141.

In addition, according to this configuration of the present disclosure, by the protrusion P, the separated space may be secured stably between the upper screen 141 and the lower screen 142. Therefore, the gas inside the battery can 200 may be easily discharged to the outside through the upper screen 141 and the lower screen 142.

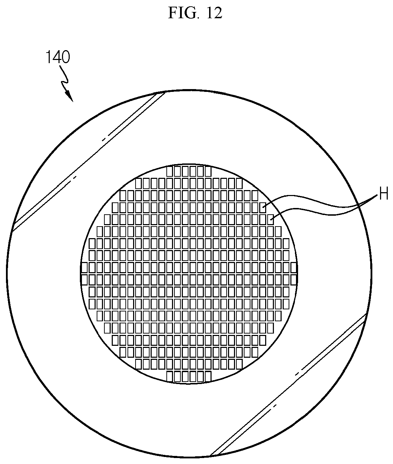

Meanwhile, in the embodiment, even though it has been described that the positions of the meshes of the plurality of unit screens are different from each other in the horizontal direction as different mesh forms, different mesh forms may also be implemented in other various ways. For example, different mesh forms between the unit screens may be implemented to have different hole shapes or sizes. This will be described with further reference to FIGS. 11 and 12.

FIGS. 11 and 12 are top views schematically showing a screen member 140 according to still another embodiments of the present disclosure.

First, referring to FIG. 11, the screen member 140 may be configured in a circular plate shape in which a central portion thereof is formed in a dome shape. At this time, a plurality of holes H are formed in the dome portion, and each hole H may be formed in a circle shape. In addition, FIG. 12 is similar to the embodiment of FIG. 11, except that the plurality of holes H provided in the screen member 140 are formed in a rectangular shape instead of a circle shape.

As described above, the screen member 140 or the unit screen may be configured to have various mesh forms. In particular, when a plurality of unit screens are included in the cap assembly 100, the unit screens may be configured to have different hole shapes from each other. For example, when the upper screen 141 and the lower screen 142 are included in the screen member 140, the upper screen 141 may be formed in a shape as shown in FIG. 4, and the lower screen 142 may be formed in a shape as shown in FIG. 11. As another example, the upper screen 141 may be formed in a shape as shown in FIG. 12, and the lower screen 142 may be formed in a shape as shown in FIG. 4.

According to this configuration of the present disclosure, the plurality of unit screens stacked on each other may be easily implemented to have different mesh forms.

Meanwhile, even when one screen member 140 is included in the cap assembly 100, the screen member 140 as shown in FIGS. 11 or 12 as well as FIG. 4 may be used.

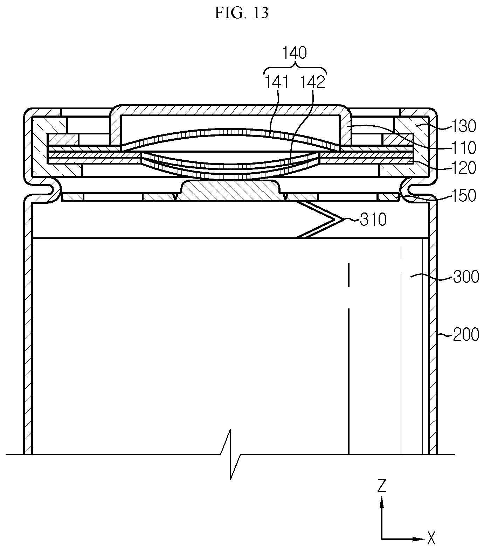

FIG. 13 is a sectional view schematically showing a cap assembly 100 according to an embodiment of the claimed invention. Regarding this embodiment, features different from the former embodiments will be described in detail.

Referring to FIG. 13, the cap assembly 100 includes an upper screen 141 and a lower screen 142 as the plurality of unit screens, and both the upper screen 141 and the lower screen 142 are formed in a dome shape. According to the invention, the upper screen 141 is configured to have a dome shape such that at least a central portion thereof is convex upward. In addition, the lower screen 142 is configured in a dome shape such that a central portion thereof is convex downward.

In this case, the upper screen 141 may be configured such that at least a portion of the dome shape structure is inserted into the concave portion of the top cap 110. That is, the top cap 110 is formed to be convex upward, and when the top cap 110 is viewed from the below, it may be regarded that a concave portion is formed at the top cap 110. In this case, the upper screen 141 may be positioned below the top cap 110, and at least a portion of the upper screen 141 may be inserted into the concave portion of the top cap 110.

In addition, the lower screen 142 may be configured such that at least a portion of the dome shape structure is inserted into the concave portion of the safety vent 120. That is, the safety vent 120 is formed to be convex downward in a normal state, and when the safety vent 120 is viewed from the above, it may be regarded that a concave portion is formed at the safety vent 120. In addition, the lower screen 142 is located above the safety vent 120, and at least a portion of the lower screen 142 may be inserted into the concave portion of the safety vent 120.

According to this configuration of the present disclosure, even if a plurality of unit screens are included as the screen member 140 in the cap assembly 100, it is possible to minimize an increase in volume of the cap assembly 100 due to the unit screens. In addition, according to the embodiment, the separated distance between the unit screens may be safely secured in a normal state.

In the above embodiment, the lower screen 142 may be configured such that the convex shape is reversed from the bottom to the top due to the deformation of the safety vent 120. That is, when gas is discharged from the inside of the battery can 200 to the outside due to an increase in the internal pressure of the battery can 200, the safety vent 120 may be reversed to be convex upward as shown in FIG. 7. At this time, the lower screen 142 may be configured such that, when the safety vent 120 is reversed, the lower screen 142 is reversed from the downwardly convex shape to the upwardly convex shape, like the safety vent 120. In particular, the lower screen 142 may be deformed from the downwardly protruding shape to the upwardly protruding shape by the pushing force generated when the safety vent 120 is reversed. For example, when the safety vent 120 is deformed to be convex upward as shown in FIG. 7, the lower screen 142 may be configured to be deformed to be convex upward as shown in FIG. 9.

According to this implementation configuration of the present disclosure, in an emergency situation in which gas is discharged, it is possible to prevent the deformation operation of the safety vent 120 from being disturbed due to the lower screen 142. In addition, according to the embodiment, even in an emergency situation, the lower screen 142 forms a dome shape, so that the gas ejection pressure may be evenly distributed over the entire lower screen 142.

In addition, in the above configuration, the lower screen 142 may be configured such that, when the convex shape is reversed, at least some holes are located at different positions from the holes of the upper screen 141 in the horizontal direction.

For example, when the safety vent 120 and the lower screen 142 are convexly reversed to be convex upward due to the gas ejection, some or all of the plurality of holes H2 formed in the lower screen 142 may be located at different positions from the holes H1 of the upper screen 141 in the horizontal direction (left and right direction in the drawing), as shown in FIG. 10.

According to this embodiment of the present disclosure, as described above with reference to FIG. 10, in a situation in which gas is discharged, a bent portion is formed in the gas discharge path, thereby further improving the active material filtering effect by the screen member 140.

In addition, in the above configuration, the lower screen 142 may be configured such that at least a portion thereof is spaced apart from the upper screen 141 by a predetermined distance when the convex shape is reversed.

For example, in a state in which the lower screen 142 is reversed to be convex upward, the lower screen 142 and the upper screen 141 may be configured to be spaced apart from each other by a predetermined distance. That is, the lower screen 142 and the upper screen 141 may be configured such that, even in an abnormal state in which gas is discharged, the central portions thereof excluding the portions covered by the gasket 130 does not directly contact each other.

According to this configuration of the present disclosure, when gas is discharged, it is possible to smoothly discharge the gas in the space between the upper screen 141 and the lower screen 142. That is, when gas is discharged, even if the distance between the lower screen 142 and the upper screen 141 is decreased due to the shape reverse of the lower screen 142, a certain space may be secured, so that the gas discharge may not be disturbed. Therefore, the effect of improving battery safety according to the present disclosure may be stably secured.

A battery pack according to the present disclosure may include at least one secondary battery according to the present disclosure described above. In particular, when a plurality of secondary batteries are included in the battery pack, each secondary battery may include the cap assembly 100 according to the present disclosure. Thus, even if any one secondary battery explodes or ignites, it is possible to prevent other secondary batteries from igniting in a chain.

Meanwhile, although terms indicating directions such as "upper", "lower", "left" and "right" have been used in this specification, it is obvious to those skilled in the art that these terms are only for convenience of explanation, and may be expressed differently depending on a viewing position of an observer or a location of an object.

### Reference Signs

100: cap assembly
110: top cap
120: safety vent
130: gasket
140: screen member
141: upper screen, 142: lower screen
150: current interrupt member
200: battery can
300: electrode assembly
310: positive electrode lead

## Claims

1. A cap assembly (100) for a secondary battery, which is adapted to be coupled to an open end of a battery can (200), the cap assembly (100) comprising:
a top cap (110) disposed on an uppermost portion of the cap assembly (100) in a protrusive form to form a positive electrode terminal;
a safety vent (120) disposed below the top cap (110) to deform a shape when an internal pressure of the battery can (200) increases;
a gasket (130) configured to surround edges of the top cap (110) and the safety vent (120); and
a screen member (140) interposed between the top cap (110) and the safety vent (120) and having an edge surrounded by the gasket (130), the screen member (140) being at least partially configured in a mesh form,
**characterized in that**
the screen member (140) includes a plurality of unit screens (141, 142) stacked on each other in a vertical direction,
wherein an upper screen (141) among the plurality of unit screens (141, 142) is formed in a dome shape such that at least a central portion is convex upward, and a lower screen (142) among the plurality of unit screens (141, 142) is formed in a dome shape such that at least a central portion is convex downward.

2. The cap assembly (100) for a secondary battery according to claim 1, further comprising:
a current interrupt member (150) having an upper portion connected to a lower end of the safety vent (120) and a lower portion connected to an electrode assembly (300) and configured to interrupt electric connection between the electrode assembly (300) and the top cap (110) when the safety vent (120) deforms.

3. The cap assembly (100) for a secondary battery according to claim 1,
wherein the screen member (140) includes a protrusion (P) formed to protrude upward or downward.

4. The cap assembly (100) for a secondary battery according to claim 1,
wherein the plurality of unit screens (141, 142) are configured to have different mesh forms from each other.

5. The cap assembly (100) for a secondary battery according to claim 1,
wherein the lower screen (142) is configured such that a convex shape thereof is reversed from a downward direction to an upward direction by the deformation of the safety vent.

6. The cap assembly (100) for a secondary battery according to claim 5,
wherein the lower screen (142) is configured such that at least some of holes formed therein are located at different positions from holes formed in the upper screen (141) in a horizontal direction when the convex shape is reversed.

7. A secondary battery, comprising the cap assembly (100) for a secondary battery according to any one of claims 1 to 6.

8. A battery pack, comprising at least one secondary battery according to claim 7.

## Patentansprüche

1. Kappenanordnung (100) für eine Sekundärbatterie, die angepasst ist, um mit einem offenen Ende eines Batteriebehälters (200) gekoppelt zu werden, wobei die Kappenanordnung (100) Folgendes umfasst:
eine obere Kappe (110), die auf einem obersten Abschnitt der Kappenanordnung (100) in einer vorstehenden Form angeordnet ist, um einen positiven Elektrodenanschluss zu bilden;
eine Sicherheitsentlüftung (120), die unter der oberen Kappe (110) angeordnet ist, um eine Form zu verformen, wenn ein Innendruck des Batteriebehälters (200) zunimmt;
eine Dichtung (130), die konfiguriert ist, um Kanten der oberen Kappe (110) und der Sicherheitsentlüftung (120) zu umgeben; und
ein Siebelement (140), das zwischen der oberen Kappe (110) und der Sicherheitsentlüftung (120) angeordnet ist und eine Kante aufweist, die von der Dichtung (130) umgeben ist, wobei das Siebelement (140) zumindest teilweise in einer Netzform konfiguriert ist,
**dadurch gekennzeichnet, dass**
das Siebelement (140) eine Vielzahl von Siebeinheiten (141, 142) beinhaltet, die in einer vertikalen Richtung aufeinander gestapelt sind,
wobei eine obere Siebeinheit (141) unter der Vielzahl von Siebeinheiten (141, 142) in einer Kuppelform gebildet ist, so dass zumindest ein zentraler Abschnitt nach oben konvex ist, und eine untere Siebeinheit (142) unter der Vielzahl von Siebeinheiten (141, 142) in einer Kuppelform gebildet ist, so dass zumindest ein zentraler Abschnitt nach unten konvex ist.

2. Kappenanordnung (100) für eine Sekundärbatterie nach Anspruch 1, ferner umfassend:
ein Stromunterbrechungselement (150) mit einem oberen Abschnitt, der mit einem unteren Ende der Sicherheitsentlüftung (120) verbunden ist, und einem unteren Abschnitt, der mit einer Elektrodenanordnung (300) verbunden ist und konfiguriert ist, um eine elektrische Verbindung zwischen der Elektrodenanordnung (300) und der oberen Kappe (110) zu unterbrechen, wenn sich die Sicherheitsentlüftung (120) verformt.

3. Kappenanordnung (100) für eine Sekundärbatterie nach Anspruch 1,
bei der das Siebelement (140) einen Vorsprung (P) beinhaltet, der ausgebildet ist, um nach oben oder unten vorzustehen.

4. Kappenanordnung (100) für eine Sekundärbatterie nach Anspruch 1,
bei der die Vielzahl von Siebeinheiten (141, 142) konfiguriert ist, um voneinander verschiedene Netzformen aufzuweisen.

5. Kappenanordnung (100) für eine Sekundärbatterie nach Anspruch 1,
bei der die untere Siebeinheit (142) derart konfiguriert ist, dass eine konvexe Form derselben durch die Verformung der Sicherheitsentlüftung von einer Abwärtsrichtung in eine Aufwärtsrichtung umgekehrt wird.

6. Kappenanordnung (100) für eine Sekundärbatterie nach Anspruch 5,
bei der die untere Siebeinheit (142) derart konfiguriert ist, dass zumindest einige der darin gebildeten Löcher an abweichenden Positionen von Löchern angeordnet sind, die in der oberen Siebeinheit (141) in einer horizontalen Richtung gebildet sind, wenn die konvexe Form umgekehrt wird.

7. Sekundärbatterie, umfassend die Kappenanordnung (100) für eine Sekundärbatterie nach einem der Ansprüche 1 bis 6.

8. Batteriepack, umfassend zumindest eine Sekundärbatterie nach Anspruch 7.

## Revendications

1. Ensemble capuchon (100) pour une batterie rechargeable, qui est adapté pour être couplé à l'extrémité ouverte d'un compartiment de batterie (200), l'ensemble capuchon (100) comprenant :
un capuchon supérieur (110) disposé sur une partie supérieure de l'ensemble capuchon (100) sous forme de saillie pour former une borne d'électrode positive ;
un évent de sécurité (120) disposé au-dessous du capuchon supérieur (110) de façon à déformer une forme quand une pression interne du compartiment de batterie (200) augmente ;
un joint d'étanchéité (130) configuré pour entourer les bords du capuchon supérieur (110) et de l'évent de sécurité (120) ; et
un élément d'écran (140) interposé entre le capuchon supérieur (110) et l'évent de sécurité (120) et ayant un bord entouré par le joint d'étanchéité (130), l'élément d'écran (140) étant au moins partiellement configuré sous forme de maillage,
**caractérisé en ce que**
l'élément d'écran (140) inclut une pluralité d'écrans unitaires (141, 142) empilés l'un sur l'autre dans une direction verticale,
dans lequel un écran supérieur (141) parmi la pluralité d'écrans unitaires (141, 142) est en forme de dôme de telle sorte qu'au moins une partie centrale est convexe vers le haut, et un écran inférieur (142) parmi la pluralité d'écrans unitaires (141, 142) est en forme de dôme de telle sorte qu'au moins une partie centrale est convexe vers le bas.

2. Ensemble capuchon (100) pour une batterie rechargeable selon la revendication 1, comprenant en outre :
un élément d'interruption de courant (150) ayant une partie supérieure reliée à une extrémité inférieure de l'évent de sécurité (120) et une partie inférieure reliée à un ensemble électrode (300) et configuré pour interrompre la connexion électrique entre l'ensemble électrode (300) et le capuchon supérieur (110) quand l'évent de sécurité (120) se déforme.

3. Ensemble capuchon (100) pour une batterie rechargeable selon la revendication 1,
dans lequel l'élément d'écran (140) inclut une saillie (P) formée pour saillir vers le haut ou vers le bas.

4. Ensemble capuchon (100) pour une batterie rechargeable selon la revendication 1,
dans lequel la pluralité d'écrans unitaires (141, 142) sont configurés pour avoir des formes de maillage différentes l'une de l'autre.

5. Ensemble capuchon (100) pour une batterie rechargeable selon la revendication 1,
dans lequel l'écran inférieur (142) est configuré de telle sorte que sa forme convexe est inversée d'une direction vers le bas à une direction vers le haut par la déformation de l'évent de sécurité.

6. Ensemble capuchon (100) pour une batterie rechargeable selon la revendication 5,
dans lequel l'écran inférieur (142) est configuré de telle sorte qu'au moins certains des trous y étant formés sont situés à des positions différentes des trous formés dans l'écran supérieur (141) dans une direction horizontale quand la forme convexe est inversée.

7. Batterie rechargeable, comprenant l'ensemble capuchon (100) pour une batterie rechargeable selon l'une quelconque des revendications 1 à 6.

8. Bloc-batterie, comprenant au moins une batterie rechargeable selon la revendication 7.
